(19) **Europäisches Patentamt**
**European Patent Office**
**Office européen des brevets**

(11) **EP 2 958 259 B1**

(12) **EUROPEAN PATENT SPECIFICATION**

(45) Date of publication and mention
of the grant of the patent:
**23.02.2022   Bulletin 2022/08**

(21) Application number: **13879978.8**

(22) Date of filing: **29.03.2013**

(51) International Patent Classification (IPC):
**H04L 1/18** (2006.01)

(52) Cooperative Patent Classification (CPC):
**H04L 1/16; H04L 1/1864; H04L 1/1896**

(86) International application number:
**PCT/CN2013/073427**

(87) International publication number:
**WO 2014/153769 (02.10.2014 Gazette 2014/40)**

(54) **METHOD FOR TRANSMITTING FEEDBACK INFORMATION, USER EQUIPMENT AND EVOLVED NODE B**

VERFAHREN ZUR ÜBERTRAGUNG VON FEEDBACKINFORMATIONEN, BENUTZERVORRICHTUNG UND EVOLVED NODE B

PROCÉDÉ DE TRANSMISSION D'INFORMATIONS DE RÉTROACTION, ÉQUIPEMENT UTILISATEUR ET NOEUD B ÉVOLUÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.12.2015   Bulletin 2015/52**

(73) Proprietor: **Huawei Technologies Co., Ltd.**
**Longgang District**
**Shenzhen, Guangdong 518129 (CN)**

(72) Inventors:
• **JI, Tong**
**Shenzhen**
**Guangdong 518129 (CN)**

• **LV, Yongxia**
**Shenzhen**
**Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(56) References cited:
**EP-A1- 1 954 084        EP-A1- 1 981 299**
**CN-A- 101 345 609        CN-A- 101 594 666**
**CN-A- 101 980 576        CN-A- 102 006 635**
**US-A1- 2007 206 531**

## Description

## TECHNICAL FIELD

Embodiments of the present invention relate to mobile communications technologies, and in particular, to a feedback information transmission method, user equipment (UE), and a base station (Evolved NodeB, eNB for short).

## BACKGROUND

In a Long Term Evolution (LTE) communications system, data is sent in a manner of establishing a connection, and UE first establishes a connection to an eNB after achieving synchronization by means of random access and then sends data.

The foregoing manner of sending data by establishing a connection is not applicable to an application scenario, such as an Machine to Machine (M2M) network system, in which a large quantity of small data packets exist. In comparison, a connectionless data transmission manner is more suitable for transmission of a small data packet. The connectionless data transmission manner refers to a data transmission manner defined in non-LTE release 8 to release 11, and is a manner in which data can be transmitted without performing at least one of the following operations: achieving uplink synchronization by means of random access, establishing a Radio Resource Control (RRC) Protocol connection, and establishing a radio bearer.

In the connectionless data transmission manner, there is a case in which multiple UEs send uplink data to an eNB in a same time-frequency resource, which causes that the eNB cannot successfully receive the uplink data of all the UEs. Because there is no method for transmitting feedback information by an eNB to UE in the prior art, when the eNB does not successfully receive uplink data of UE, that the eNB does not successfully receive the uplink data of the UE cannot be learned by the UE; as a result, the UE does not resend the uplink data to the eNB, causing that reliability of a communications system that uses the connectionless data transmission manner is low. EP 1 954 084 A1 A discloses a packet communication method including: transmitting, at a mobile station, a random access request that includes mobile station information assigned to the mobile station, to a radio base station through a random access channel allocated to a predetermined radio resource; receiving, at the radio base station, the random access request from the mobile station; and transmitting, at the radio base station, a random access response signal that notifies the receipt of the random access request and includes the mobile station information, to the mobile station through a downlink shared control channel corresponding to the random access channel.

CN 101 980 576 A discloses a random access processing method and user equipment. The method comprises the following steps: after receiving current random access response information from an evolved node B, comparing current uplink authorization information in the current random access response information with pre-stored uplink authorization information, wherein the pre-stored uplink authorization information is uplink authorization information in the last random access response information received in the last random access process; when the current uplink authorization information is inconsistent with the pre-stored uplink authorization information, scheduling and packing data according to the current uplink authorization information to generate a first data packet carrying a user equipment identifier; transmitting the first data packet to the evolved node B, and receiving a second data packet from the evolved node B; resolving the second data packet; and judging whether competition for random access is successful or not according to a resolution result.

US 2007/0206531 A1 discloses a random access procedure for use by a UE wireless communication terminal in communicating with a base station (or Norte-B or eNB) of a radio access network, and in particular a E-UTRA network.

## SUMMARY

Objects of the present invention are achieved by subject matters of the independent claims.

A first aspect of the present invention provides a feedback information transmission method, so as to overcome a defect in the prior art, and improve reliability of a communications system that uses a connectionless data transmission manner.

Another aspect of the present invention provides UE and an eNB, so as to overcome a defect in the prior art, and improve reliability of a communications system that uses a connectionless data transmission manner.

A first aspect of the present invention provides a feedback information transmission method according to independent claim 1.

Another aspect of the present invention provides a feedback information transmission method according to independent claim 4.

Another aspect of the present invention provides user equipment UE according to claim 7.

Another aspect of the present invention provides a base station eNB according to independent claim 10.

- (excised)

It can be seen from the foregoing summary that UE adds identity information that is corresponding to the UE while sending uplink data, and an eNB returns downlink feedback information to the UE according to the identity information, so that when the eNB does not successfully receive uplink data of all UEs, UE can learn, by using feedback information from the eNB, whether uplink data sent by the UE is successfully received by the eNB; therefore, in a case in which the eNB does not successfully receives the uplink data, the UE may resend the uplink data to the eNB, until the eNB successfully receives the uplink data, thereby ensuring that the eNB can successfully receive the uplink data sent by the UE, and improving reliability of a communications system that uses a connectionless data transmission manner.

## BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.

Embodiments 1-2 mentioned in the following list of drawings are not part of the invention, but illustrative examples necessary for understanding the invention.

FIG 1 is a flowchart of a feedback information transmission method according to Embodiment 1 of the present invention;
FIG. 2 is a flowchart of a feedback information transmission method according to Embodiment 2 of the present invention;
FIG 3 is a flowchart of a feedback information transmission method according to Embodiment 3 of the present invention;
FIG 4 is a flowchart of a feedback information transmission method according to Embodiment 4 of the present invention;
FIG 5 is a schematic structural diagram of UE according to Embodiment 5 of the present invention;
FIG 6 is a schematic structural diagram of an eNB according to Embodiment 6 of the present invention;
FIG 7 is a schematic structural diagram of UE according to Embodiment 7 of the present invention; and
FIG 8 is a schematic structural diagram of an eNB according to Embodiment 8 of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some rather than all of the embodiments of the present invention. All other embodiments obtained by persons of ordinary skill in the art based on the embodiments of the present invention without creative efforts shall fall within the protection scope of the present invention.

In the embodiments of the present invention, UE sends uplink data to an eNB in a connectionless data transmission manner; the eNB receives the uplink data from the UE in the connectionless data transmission manner, and returns downlink feedback information to the UE by using methods provided in the embodiments of the present invention; and the UE learns, by using the downlink feedback information, whether the uplink data is successfully or unsuccessfully received, and resends the uplink data to the eNB when the uplink data is unsuccessfully received. Embodiments 1 in the following is not part of the invention, but an illustrative example necessary for understanding the invention.

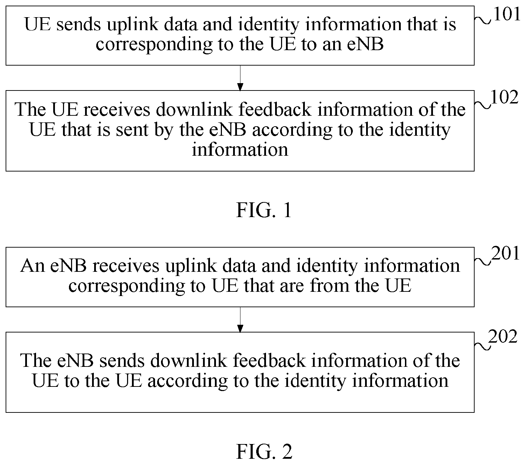

FIG 1 is a flowchart of a feedback information transmission method according to Embodiment 1 of the present invention. As shown in FIG 1, the method includes the following process.

Step 101: UE sends uplink data and identity information that is corresponding to the UE to an eNB.

In this step, the UE uses a connectionless data transmission manner, that is, when the UE needs to send uplink data, the UE does not perform a connection operation, but directly sends the uplink data to the eNB. In the embodiments of the present invention, the UE sends the identity information that is corresponding to the UE while sending the uplink data. Identity information of each UE is used to distinguish the UE from other UEs.

Step 102: The UE receives downlink feedback information of the UE that is sent by the eNB according to the identity information.

In this step, the UE receives the downlink feedback information, learns, according to the downlink feedback information, whether the uplink data is successfully or unsuccessfully received, and resends the uplink data to the eNB when the uplink data is unsuccessfully received.

In Embodiment 1 of the present invention, UE adds identity information that is corresponding to the UE while sending uplink data, and after sending the uplink data, the UE receives downlink feedback information that is sent by an eNB according to the identity information, so that when the eNB does not successfully receive uplink data of all UEs, UE can learn, by using feedback information from the eNB, whether uplink data sent by the UE is successfully received by the eNB; therefore, in a case in which the eNB does not successfully receive the uplink data, the UE may resend the uplink data to the eNB, until the eNB successfully receives the uplink data, thereby ensuring that the eNB can successfully receive the uplink data sent by the UE, and improving reliability of a communications system that uses a connectionless data transmission manner.

Embodiments 2 in the following is not part of the invention, but an illustrative example necessary for understanding the invention.

FIG 2 is a flowchart of a feedback information transmission method according to Embodiment 2 of the present invention. As shown in FIG 2, the method includes the following process.

Step 201: An eNB receives uplink data and identity information corresponding to UE that are from the UE.

In this step, when the UE needs to send uplink data, a connectionless data transmission manner is used, that is, the UE does not perform a connection operation, and directly sends the uplink data to the eNB. The UE also sends the identity information that is corresponding to the UE while sending the uplink data. Correspondingly, the eNB receives, in the connectionless data transmission manner, the uplink data and the identity information corresponding to the UE that are from the UE. Identity information of each UE is used to distinguish the UE from other UEs.

Step 202: The eNB sends downlink feedback information of the UE to the UE according to the identity information.

In this step, the eNB sends the downlink feedback information to the UE, so that the UE learns, according to the downlink feedback information, whether the uplink data is successfully or unsuccessfully received, and resends the uplink data to the eNB when the uplink data is unsuccessfully received.

In Embodiment 2 of the present invention, an eNB receives uplink data that is sent by UE and that carries identity information that is corresponding to the UE, and the eNB sends, according to the identity information, downlink feedback information that is corresponding to the UE, so that when the eNB does not successfully receive uplink data of all UEs, the eNB can notify each UE whether uplink data sent by the UE is successfully received by the eNB; therefore, in a case in which the eNB does not successfully receive the uplink data, the UE may resend the uplink data to the eNB, until the eNB successfully receives the uplink data, thereby ensuring that the eNB can successfully receive the uplink data sent by the UE, and improving reliability of a communications system that uses a connectionless data transmission manner.

In the foregoing Embodiment 1 of the present invention and Embodiment 2 of the present invention, the identity information of the UE may use two manners, and correspondingly, the eNB may also send the downlink feedback information to the UE in two manners. The two manners are introduced below by using Embodiment 3 of the present invention and Embodiment 4 of the present invention.

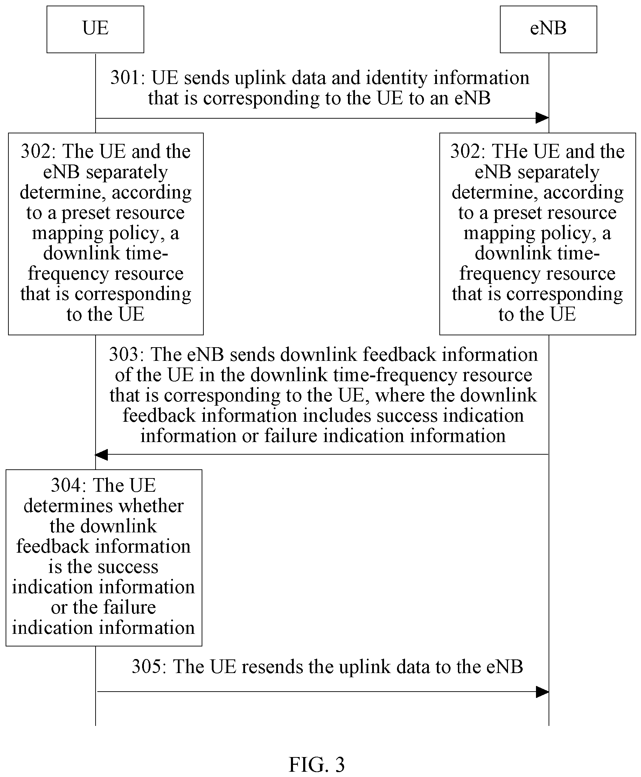

FIG 3 is a flowchart of a feedback information transmission method according to Embodiment 3 of the present invention. As shown in FIG 3, the method includes the following process.

Step 301: UE sends uplink data and identity information that is corresponding to the UE to an eNB.

In this step, the UE sends the uplink data to the eNB in a connectionless data transmission manner, and adds the identity information that is corresponding to the UE while sending the uplink data.

In Embodiment 3 of the present invention, the identity information may use at least one piece of the following information: a random code, a preamble sequence, and interleaver information. Specifically, the identity information may be a fixed value set by a communications system, and a length of the identity information may be 4 bits to 16 bits. In such an implementation manner, a case in which multiple UEs are corresponding to same identity information may occur. In an actual application, a probability that identity information of UEs is duplicate may be reduced by adjusting a length of the identity information according to an actual situation of the communications system. For example, if the length of the identity information is 4 bits, the probability that the identity information of the UEs is duplicate is 1/16; and if the length of the identity information is 6 bits, the probability that the identity information of the UEs is duplicate is 1/64. As can be seen from this, the probability that the identity information of the UEs is duplicate may be reduced by increasing the length of the identity information.

Step 302: The UE and the eNB separately determine, according to a preset resource mapping policy, a downlink time-frequency resource that is corresponding to the UE.

In this step, downlink feedback information of different UEs is distinguished according to an uplink time-frequency resource of uplink data sent by each UE and identity information that is corresponding to each UE, or according to only identity information that is corresponding to each UE. A manner used in Embodiment 3 of the present invention is that: downlink feedback information sent to different UEs is distinguished based on transmission channels on which the downlink feedback information is sent, that is, a downlink time-frequency resource in which the downlink feedback information is sent is divided into several channels according to resource start identifiers of the uplink data and the identity information, or according to only the identity information, where each channel is corresponding to a different UE, and each channel is used to send downlink feedback information to a different UE. A downlink time-frequency resource that is corresponding to each UE is determined, so that the downlink feedback information sent to the different UEs is distinguished by distinguishing downlink time-frequency resources that are corresponding to different UEs.

The eNB and the UE determine, according to the preset resource mapping policy, the downlink time-frequency resource that is corresponding to the UE. The resource mapping policy is either of the following two manners, provided that the eNB and the UE use a same resource mapping policy. Manner 1: Determining, according to an uplink time-frequency resource of the uplink data sent by the UE and the identity information that is corresponding to the UE, the downlink time-frequency resource that is corresponding to the UE. Manner 2: Determining, according to the identity information that is corresponding to the UE, the downlink time-frequency resource that is corresponding to the UE.

Manner 1:

A specific method for determining, by the eNB, the downlink time-frequency resource that is corresponding to the UE is: calculating, by the eNB according to the following formula, the downlink time-frequency resource that is corresponding to the UE:

$$q=(p\times m+i)\bmod(rmax),$$

where
q indicates an identifier of the downlink time-frequency resource that is corresponding to the UE, p indicates an identifier of the uplink time-frequency resource of the uplink data sent by the UE, m indicates a total quantity of pieces of identity information in a system, i indicates a sequence number of the identity information that is corresponding to the UE, and rmax indicates a maximum available quantity of downlink time-frequency resources.

For example, there are totally 16 uplink time-frequency resources, whose sequence numbers are 0 to 15, and the sequence number of each uplink time-frequency resource is used as an identifier of the uplink time-frequency resource. The length of the identity information is, for example, 4 bits, and then there are totally 16 types of identity information, that is, m=16. Sequence numbers of the identity information are 0 to 15, and the sequence numbers of the identity information may be sorted in ascending order according to actual binary values. A maximum available quantity of downlink time-frequency resources is, for example, 200, that is, rmax=200, and the downlink time-frequency resources include 200 channels, whose numbers are 0 to 199. If the identifier of the uplink time-frequency resource of the uplink data sent by the UE is 14, and a binary value of the identity information carried by the uplink data is 1111, that is, a sequence number of the identity information is 15, an identifier of the downlink time-frequency resource that is corresponding to the UE is: q=(p×m+i)mod(rmax)=(14×16+15)mod(200)=24, that is, the downlink time-frequency resource that is corresponding to the UE is a downlink feedback channel whose number is 24.

Correspondingly, after sending the uplink data and the identity information that is corresponding to the UE, the UE also determines, according to the uplink time-frequency resource of the sent uplink data and the corresponding identity information, the downlink time-frequency resource that is corresponding to the UE. Specifically, a specific method for determining, by the UE, the downlink time-frequency resource that is corresponding to the UE is: calculating, by the UE

according to the following formula, the downlink time-frequency resource that is corresponding to the UE:

$$q=(p\times m+i)\bmod(rmax),$$

where
q indicates an identifier of the downlink time-frequency resource that is corresponding to the UE, p indicates an identifier of the uplink time-frequency resource of the uplink data sent by the UE, m indicates a total quantity of pieces of identity information in a system, i indicates a sequence number of the identity information that is corresponding to the UE, and rmax indicates a maximum available quantity of downlink time-frequency resources.

Manner 2:

A specific method for determining, by the eNB, the downlink time-frequency resource that is corresponding to the UE is: calculating, by the eNB according to the following formula, the downlink time-frequency resource that is corresponding to the UE:

$$q=i\bmod(rmax)$$

, where
q indicates an identifier of the downlink time-frequency resource that is corresponding to the UE, i indicates a sequence number of the identity information that is corresponding to the UE, and rmax indicates a maximum available quantity of downlink time-frequency resources.

Correspondingly, after sending the uplink data and the identity information that is corresponding to the UE, the UE also determines, according to the identity information, the downlink time-frequency resource that is corresponding to the UE. Specifically, a specific method for determining, by the UE, the downlink time-frequency resource that is corresponding to the UE is: calculating, by the UE according to the following formula, the downlink time-frequency resource that is corresponding to the UE:

$$q=i\bmod(rmax),$$

where
q indicates an identifier of the downlink time-frequency resource that is corresponding to the UE, i indicates a sequence number of the identity information that is corresponding to the UE, and rmax indicates a maximum available quantity of downlink time-frequency resources.

Step 303: The eNB sends downlink feedback information of the UE in the downlink time-frequency resource that is corresponding to the UE, where the downlink feedback information includes success indication information or failure indication information.

In this step, the eNB sends, in a downlink time-frequency resource that is corresponding to UE and that is obtained through calculation in step 302, downlink feedback information that is corresponding to the UE. Correspondingly, the UE receives, in the downlink time-frequency resource that is corresponding to the UE, the downlink feedback information sent by the eNB. The downlink feedback information includes success indication information or failure indication information. Specifically, in an implementation manner, the success indication information or failure indication information may be an energy symbol on the channel. If the energy symbol is present, the success indication information is indicated; otherwise, if the energy symbol is not present, the failure indication information is indicated. Alternatively, in another implementation manner, the success indication information or failure indication information may be information being one bit; if a value of the bit is 1, the success indication information is indicated; or if a value of the bit is 0, the failure indication information is indicated.

Step 304: The UE determines whether the downlink feedback information is the success indication information or the failure indication information.

In this step, the UE receives, in the downlink time-frequency resource that is corresponding to the UE, the downlink feedback information sent by the eNB, where the downlink feedback information includes the success indication information or the failure indication information, and the UE determines whether the downlink feedback information is the success indication information or the failure indication information. If the downlink feedback information is the success indication information, the process is ended; and if the downlink feedback information is the failure indication information, step 305 is performed.

Step 305: The UE resends the uplink data to the eNB.

In this step, after determining that the downlink feedback information is the failure indication information, the UE learns that the uplink data is unsuccessfully transmitted this time; and the UE randomly generates a backoff window, and then resends the uplink data. Specifically, when resending the uplink data, the UE sends the uplink data to the eNB still in the connectionless data transmission manner.

In Embodiment 3 of the present invention, UE adds identity information that is corresponding to the UE while sending uplink data, an eNB and the UE determine, according to a time-frequency resource of the uplink data sent by the UE and the identity information, a downlink time-frequency resource of downlink feedback information that is corresponding to the UE, different UEs are distinguished by using different downlink time-frequency resources, and the eNB sends, in the time-frequency resource that is corresponding to the UE, the downlink feedback information that is corresponding to the UE, so that when the eNB does not successfully receive uplink data of all UEs, the eNB can notify each UE whether uplink data sent by the UE is successfully received by the eNB;

therefore, in a case in which the eNB does not successfully receive the uplink data, the UE may resend the uplink data to the eNB, until the eNB successfully receives the uplink data, thereby ensuring that the eNB can successfully receive the uplink data sent by the UE, and improving reliability of a communications system that uses a connectionless data transmission manner.

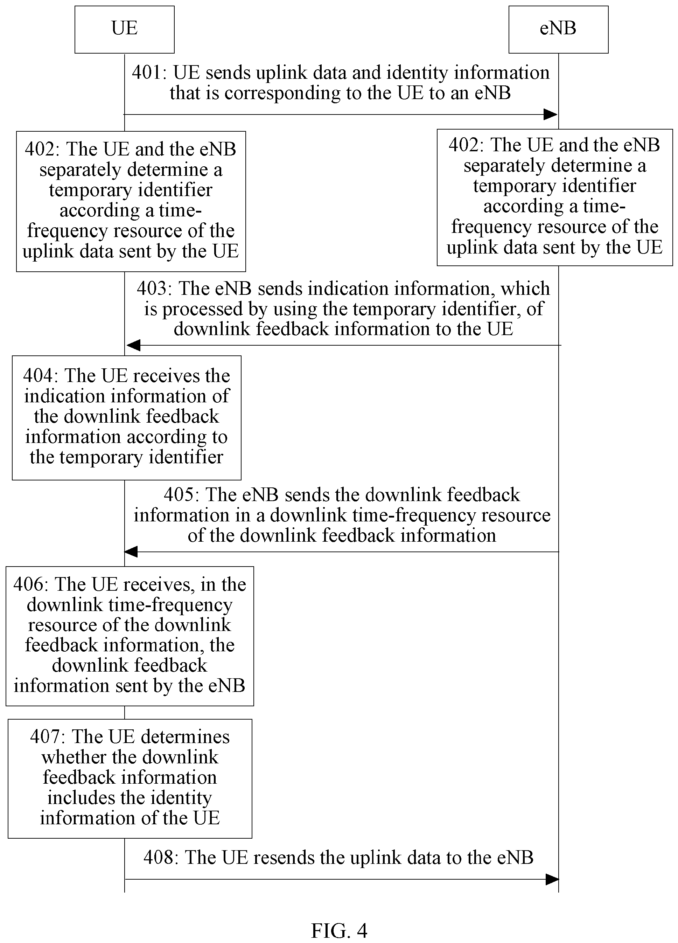

FIG. 4 is a flowchart of a feedback information transmission method according to Embodiment 4 of the present invention. As shown in FIG. 4, the method includes the following process.

Step 401: UE sends uplink data and identity information that is corresponding to the UE to an eNB.

In this step, the UE sends the uplink data to the eNB in a connectionless data transmission manner, and adds the identity information that is corresponding to the UE while sending the uplink data.

In Embodiment 4 of the present invention, the identity information may use at least one piece of the following information: a Medium Access Control (MAC) address, a UE identifier, an Internet Protocol (IP) address, and partial information of uplink data. Specifically, in Embodiment 4 of the present invention, identity information that can be in a one-to-one correspondence with each UE is used, and the identity information is long. For example, a MAC address of the UE, a user equipment identifier (UE ID), an IP address, or partial information of the uplink data may be used. Identity information in Embodiment 4 of the present invention is long, and is approximately 48 bits to 128 bits. The identity information is in a one-to-one correspondence with the UE, and all different UEs can be distinguished completely. The partial information of the uplink data may be used as the identity information. Specifically, several bits of the uplink data sent by the UE are taken out to be used as the identity information; or several bits of the uplink data sent by the UE are taken out and undergo simple computation to be used as the identity information; when a quantity of bits that are taken out is great, a probability that identity information of different UEs is duplicate is extremely small; therefore, it may be considered that different UEs can be completely distinguished in a manner in which partial information of uplink data is used as identity information.

Step 402: The UE and the eNB separately determine a temporary identifier according to a time-frequency resource of the uplink data sent by the UE.

In this step, after sending the uplink data that carries the identity information, the UE determines the temporary identifier according to the time-frequency resource of the uplink data sent by the UE. In an implementation manner, the temporary identifier may be a contention access radio network temporary identifier (CA-RNTI). In addition, after receiving the uplink data that carries the identity information and that is sent by the UE, the eNB also determines the temporary identifier according to the time-frequency resource of the uplink data sent by the UE. Specifically, a same correspondence between a time-frequency resource and a temporary identifier is preset on the UE and the eNB, and both the UE and the eNB determine, according to the correspondence, the temporary identifier that is corresponding to the time-frequency resource of the uplink data sent by the UE. Because both the UE and the eNB determine the temporary identifier according to the same correspondence and the time-frequency resource of the uplink data sent by the UE, for UE, a temporary identifier determined by the UE is consistent with a temporary identifier determined by the eNB.

Step 403: The eNB sends indication information, which is processed by using the temporary identifier, of downlink feedback information to the UE.

In this step, the eNB sends the indication information of the downlink feedback information to the UE, and the indication information, which is sent by the eNB to the UE, of the downlink feedback information is processed by using the temporary identifier. Specifically, the indication information of the downlink feedback information may be processed by using the temporary identifier in at least the following two manners. Manner 1: The eNB adds the temporary identifier while sending the indication information of the downlink feedback information. Manner 2: For each different time-frequency resource, the eNB scrambles, by using a temporary identifier that is corresponding to each time-frequency resource, cyclic redundancy check (Cyclic Redundancy Check, CRC for short) bits in indication information, which is corresponding to UE that sends uplink data in the time-frequency resource, of downlink feedback information, and then sends scrambled indication information of the downlink feedback information on a preset channel. The indication information of the downlink feedback information includes a downlink time-frequency resource and a feedback packet size of the downlink feedback information.

Step 404: The UE receives the indication information of the downlink feedback information according to the temporary identifier.

In this step, the UE receives the indication information of the downlink feedback information according to the temporary identifier, where the indication information of the downlink feedback information includes the downlink time-frequency resource and the feedback packet size of the downlink feedback information; and the UE learns the downlink time-frequency resource of the downlink feedback information according to the indication information of the downlink feedback information. For manner 1 described in step 403, each UE matches a temporary identifier of the UE with a temporary identifier carried in a downlink time-frequency resource, and receives indication information, which matches the temporary identifier of the UE, of downlink feedback information. For manner 2 described in step 403, each UE descrambles the CRC bits on the foregoing preset channel by using a respective temporary identifier of the UE, and each UE acquires indication information, which is corresponding to a time-frequency resource of uplink data sent by the UE, of downlink feedback information.

Step 405: The eNB sends the downlink feedback information in a downlink time-frequency resource of the downlink feedback information.

In this step, the eNB sends, in the downlink time-frequency resource of the downlink feedback information, the downlink feedback information, where the downlink feedback information sent by the eNB includes the identity information of the UE that is successfully received by the eNB.

Step 406: The UE receives, in the downlink time-frequency resource of the downlink feedback information, the downlink feedback information sent by the eNB.

In this step, the UE receives, in the downlink time-frequency resource of the downlink feedback information, the downlink feedback information sent by the eNB. Specifically, the UE receives the downlink feedback information according to the downlink time-frequency resource and the feedback packet size, where the downlink feedback information includes the identity information of the UE that is successfully received by the eNB.

Step 407: The UE determines whether the downlink feedback information includes the identity information of the UE.

In this step, the UE determines whether the downlink feedback information includes the identity information of the UE, and if the downlink feedback information includes the identity information of the UE, the process is ended; or if the downlink feedback information does not include the identity information of the UE, step 408 is performed.

Step 408: The UE resends the uplink data to the eNB.

In this step, after determining that the downlink feedback information does not include the identity information of the UE, the UE learns that the uplink data is unsuccessfully sent this time; and the UE randomly generates a backoff window, and then resends the uplink data. Specifically, when resending the uplink data, the UE sends the uplink data to the eNB still in the connectionless data transmission manner.

In Embodiment 4 of the present invention, UE adds identity information that is corresponding to the UE while sending uplink data, all identity information is in a one-to-one correspondence with all UEs, an eNB sends downlink feedback information to the UE, where the downlink feedback information includes identity information of the UE correctly received by the eNB, and different UEs are distinguished by using the identity information, so that when the eNB does not successfully receive uplink data of all UEs, the eNB can notify each UE whether uplink data sent by the UE is successfully received by the eNB; therefore, in a case in which the eNB does not successfully receive the uplink data, the UE may resend the uplink data to the eNB, until the eNB successfully receives the uplink data, thereby ensuring that the eNB can successfully receive the uplink data sent by the UE, and improving reliability of a communications system that uses a connectionless data transmission manner.

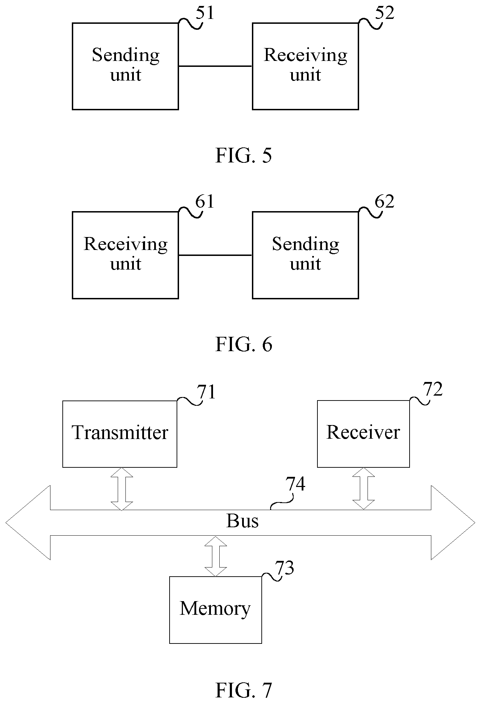

FIG. 5 is a schematic structural diagram of UE according to Embodiment 5 of the present invention. As shown in FIG. 5, the UE includes at least a sending unit 51 and a receiving unit 52.

The sending unit 51 is configured to send uplink data and identity information that is corresponding to the UE to an eNB. Specifically, the sending unit 51 sends, in a connectionless data transmission manner, the uplink data and the identity information that is corresponding to the UE to the eNB.

The receiving unit 52 is configured to receive downlink feedback information of the UE that is sent by the eNB according to the identity information.

Based on the foregoing technical solution, further, in a first implementation manner, the identity information includes at least one of a random code, a preamble sequence, and interleaver information. Correspondingly, the receiving unit 52 is specifically configured to determine, according to a preset resource mapping policy, a downlink time-frequency resource that is corresponding to the UE. The resource mapping policy includes: determining, according to an uplink time-frequency resource of the uplink data sent by the UE and the identity information that is corresponding to the UE, the downlink time-frequency resource that is corresponding to the UE; or determining, according to the identity information that is corresponding to the UE, the downlink time-frequency resource that is corresponding to the UE. The receiving unit 52 is further specifically configured to receive, in the downlink time-frequency resource that is corresponding to the UE, the downlink feedback information sent by the eNB, where the downlink feedback information includes success indication information or failure indication information.

Based on the foregoing technical solution, further, in the first implementation manner, in a case in which the resource mapping policy is the determining, according to an uplink time-frequency resource of the uplink data sent by the UE and the identity information that is corresponding to the UE, the downlink time-frequency resource that is corresponding to the UE, the resource mapping policy is specifically: calculating, by the receiving unit 52 according to $q=(p \times m+i)mod(rmax)$, the downlink time-frequency resource that is corresponding to the UE, where q indicates an identifier of the downlink time-frequency resource that is corresponding to the UE, p indicates an identifier of the uplink time-frequency resource of the uplink data sent by the UE, m indicates a total quantity of pieces of identity information in a system, i indicates a sequence number of the identity information that is corresponding to the UE, and rmax indicates a maximum available quantity of downlink time-frequency resources.

Based on the foregoing technical solution, further, in the first implementation manner, in a case in which the resource mapping policy is the determining, according to the identity information that is corresponding to the UE, the downlink time-frequency resource that is corresponding to the UE, the resource mapping policy is specifically: calculating, by the receiving unit 52 according to $q=imod(rmax)$, the downlink time-frequency resource that is corresponding to the UE, where q indicates an identifier of the downlink time-frequency resource that is corresponding to the UE, i indicates a sequence number of the identity information that is corresponding to the UE, and rmax indicates a maximum available quantity of downlink time-frequency resources.

Based on the foregoing technical solution, further, in a second implementation manner, the identity information includes at least one of a MAC address, a UE identifier, an IP address, and partial information of the uplink data. Correspondingly, the receiving unit 52 is specifically configured to determine a temporary identifier according to a time-frequency resource of the uplink data sent by the UE. The receiving unit 52 is further specifically configured to receive indication information of the downlink feedback information according to the temporary identifier, where the indication information of the downlink feedback information includes a downlink time-frequency resource and a feedback packet size of the downlink feedback information. The receiving unit 52 is further specifically configured to receive, in the downlink time-frequency resource of the downlink feedback information, the downlink feedback information sent by the eNB, where the downlink feedback information includes the identity information of the UE that is successfully received by the eNB.

The UE in Embodiment 5 of the present invention may be configured to perform the feedback information transmission method described in Embodiment 1 of the present invention to Embodiment 4 of the present invention, and for a specific implementation process and technical effect thereof, reference may be made to Embodiment 1 of the present invention to Embodiment 4 of the present invention, which are not described herein again.

FIG. 6 is a schematic structural diagram of an eNB according to Embodiment 6 of the present invention. As shown in FIG. 6, the eNB includes at least a receiving unit 61 and a sending unit 62.

The receiving unit 61 is configured to receive uplink data and identity information corresponding to UE that are from the UE. Specifically, the receiving unit 61 is configured to receive, in a connectionless data transmission manner, the uplink data and the identity information corresponding to the UE that are from the UE.

The sending unit 62 is configured to send downlink feedback information of the UE to the UE according to the identity information.

Based on the foregoing technical solution, further, in a first implementation manner, the identity information includes at least one of a random code, a preamble sequence, and interleaver information. Correspondingly, the sending unit 62 is specifically configured to determine, according to a preset resource mapping policy, a downlink time-frequency resource that is corresponding to the UE. The resource mapping policy includes: determining, according to an uplink time-frequency resource of the uplink data sent by the UE and the identity information that is corresponding to the UE, the downlink time-frequency resource that is corresponding to the UE; or determining, according to the identity information that is corresponding to the UE, the downlink time-frequency resource that is corresponding to the UE. The sending unit 62 is further specifically configured to send the downlink feedback information of the UE in the downlink time-frequency resource that is corresponding to the UE, where the downlink feedback information includes success indication information or failure indication information.

Based on the foregoing technical solution, further, in the foregoing first implementation manner, in a case in which the resource mapping policy is the determining, according to an uplink time-frequency resource of the uplink data sent by the UE and the identity information that is corresponding to the UE, the downlink time-frequency resource that is corresponding to the UE, the resource mapping policy is specifically: calculating, by the sending unit 62 according to $q=(p \times m+i) \bmod (r_{max})$, the downlink time-frequency resource that is corresponding to the UE, where q indicates an identifier of the downlink time-frequency resource that is corresponding to the UE, p indicates an identifier of the uplink time-frequency resource of the uplink data sent by the UE, m indicates a total quantity of pieces of identity information in a system, i indicates a sequence number of the identity information that is corresponding to the UE, and $r_{max}$ indicates a maximum available quantity of downlink time-frequency resources.

Based on the foregoing technical solution, further, in the foregoing first implementation manner, in a case in which the resource mapping policy is the determining, according to the identity information that is corresponding to the UE, the downlink time-frequency resource that is corresponding to the UE, the resource mapping policy is specifically: calculating, by the sending unit 62 according to $q=i \bmod (r_{max})$, the downlink time-frequency resource that is corresponding to the UE, where q indicates an identifier of the downlink time-frequency resource that is corresponding to the UE, i indicates a sequence number of the identity information that is corresponding to the UE, and $r_{max}$ indicates a maximum available quantity of downlink time-frequency resources.

Based on the foregoing technical solution, further, in a second implementation manner, the identity information includes at least one of a MAC address, a UE identifier, an IP address, and partial information of the uplink data. Correspondingly, the sending unit 62 is specifically configured to determine a temporary identifier according to a time-frequency resource of the uplink data sent by the UE. The sending unit 62 is further specifically configured to send the temporary identifier and indication information of the downlink feedback information, where the indication information of the downlink feedback information includes a downlink time-frequency resource and a feedback packet size of the downlink feedback information. The sending unit 62 is further specifically configured to send the downlink feedback information in the downlink time-frequency resource of the downlink feedback information, where the downlink feedback information includes the identity information of the UE that is successfully received by the eNB.

The eNB in Embodiment 6 of the present invention may be configured to perform the feedback information transmission method described in Embodiment 1 of the present invention to Embodiment 4 of the present invention, and for a specific implementation process and technical effect thereof, reference may be made to Embodiment 1 of the present invention to Embodiment 4 of the present invention, which are not described herein again.

FIG. 7 is a schematic structural diagram of UE according to Embodiment 7 of the present invention. As shown in FIG. 7, the UE includes at least a transmitter 71, a receiver 72, a memory 73, and a bus 74.

The transmitter 71 is configured to send uplink data and identity information that is corresponding to the UE to an eNB. Specifically, the transmitter 71 is configured to send, in a connectionless data transmission manner, the uplink data and the identity information that is corresponding to the UE to the eNB.

The receiver 72 is configured to receive downlink feedback information of the UE that is sent by the eNB according to the identity information.

The memory 73 is configured to store the identity information that is corresponding to the UE.

The bus 74 is configured to connect the transmitter 71, the receiver 72, and the memory 73, where the transmitter 71, the receiver 72, and the memory 73 communicate with one another by using the bus 74.

Based on the foregoing technical solution, further, in a first implementation manner, the identity information includes at least one of a random code, a preamble sequence, and interleaver information. Correspondingly, the receiver 72 is specifically configured to determine, according to a preset resource mapping policy, a downlink time-frequency resource that is corresponding to the UE. The resource mapping policy includes: determining, according to an uplink time-frequency resource of the uplink data sent by the UE and the identity information that is corresponding to the UE, the downlink time-frequency resource that is corresponding to the UE; or determining, according to the identity information that is corresponding to the UE, the downlink time-frequency resource that is corresponding to the UE. The receiver 72 is further specifically configured to receive, in the downlink time-frequency resource that is corresponding to the UE, the downlink feedback information sent by the eNB, where the downlink feedback information includes success indication information or failure indication information.

Based on the foregoing technical solution, further, in the first implementation manner, in a case in which the resource mapping policy is the determining, according to an uplink time-frequency resource of the uplink data sent by the UE and the identity information that is corresponding to the UE, the downlink time-frequency resource that is corresponding to the UE, the resource mapping policy is specifically: calculating, by the receiver 72 according to $q=(p{\times}m+i)\mathrm{mod}(rmax)$, the downlink time-frequency resource that is corresponding to the UE, where q indicates an identifier of the downlink time-frequency resource that is corresponding to the UE, p indicates an identifier of the uplink time-frequency resource of the uplink data sent by the UE, m indicates a total quantity of pieces of identity information in a system, i indicates a sequence number of the identity information that is corresponding to the UE, and rmax indicates a maximum available quantity of downlink time-frequency resources.

Based on the foregoing technical solution, further, in the first implementation manner, in a case in which the resource mapping policy is the determining, according to the identity information that is corresponding to the UE, the downlink time-frequency resource that is corresponding to the UE, the resource mapping policy is specifically: calculating, by the receiver 72 according to $q=i\mathrm{mod}(rmax)$, the downlink time-frequency resource that is corresponding to the UE, where q indicates an identifier of the downlink time-frequency resource that is corresponding to the UE, i indicates a sequence number of the identity information that is corresponding to the UE, and rmax indicates a maximum available quantity of downlink time-frequency resources.

Based on the foregoing technical solution, further, in a second implementation manner, the identity information includes at least one of a MAC address, a UE identifier, an IP address, and partial information of the uplink data. Correspondingly, the receiver 72 is specifically configured to determine a temporary identifier according to a time-frequency resource of the uplink data sent by the UE. The receiver 72 is further specifically configured to receive indication information of the downlink feedback information according to the temporary identifier, where the indication information of the downlink feedback information includes a downlink time-frequency resource and a feedback packet size of the downlink feedback information. The receiver 72 is further specifically configured to receive, in the downlink time-frequency resource of the downlink feedback information, the downlink feedback information sent by the eNB, where the downlink feedback information includes the identity information of the UE that is successfully received by the eNB.

The UE in Embodiment 7 of the present invention may be configured to perform the feedback information transmission method described in Embodiment 1 of the present invention to Embodiment 4 of the present invention, and for a specific implementation process and technical effect thereof, reference may be made to Embodiment 1 of the present invention to Embodiment 4 of the present invention, which are not described herein again.

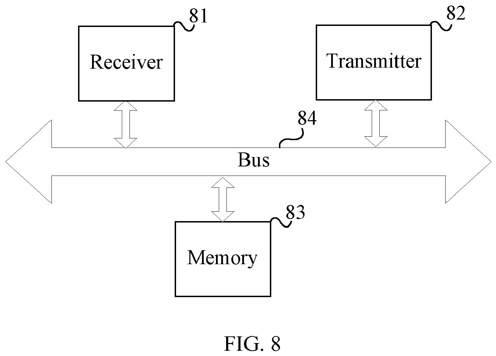

FIG. 8 is a schematic structural diagram of an eNB according to Embodiment 8 of the present invention. As shown in FIG. 8, the eNB includes at least a receiver 81, a transmitter 82, a memory 83, and a bus 84.

The receiver 81 is configured to receive uplink data and identity information corresponding to user equipment UE that are from the UE. Specifically, the receiver 81 is configured to receive, in a connectionless data transmission manner, the uplink data and the identity information corresponding to the user equipment UE that are from the UE.

The transmitter 82 is configured to send downlink feedback information of the UE to the UE according to the identity information.

The memory 83 is configured to store the identity information that is corresponding to the UE.

The bus 84 is configured to connect the transmitter 82, the receiver 81, and the memory 83, where the transmitter 82, the receiver 81, and the memory 83 communicate with one another by using the bus 84.

Based on the foregoing technical solution, further, in a first implementation manner, the identity information includes at least one of a random code, a preamble sequence, and interleaver information. Correspondingly, the transmitter 82 is specifically configured to determine, according to a preset resource mapping policy, a downlink time-frequency resource that is corresponding to the UE. The resource mapping policy includes: determining, according to an uplink time-frequency resource of the uplink data sent by the UE and the identity information that is corresponding to the UE, the downlink time-frequency resource that is corresponding to the UE; or determining, according to the identity information that is corresponding to the UE, the downlink time-frequency resource that is corresponding to the UE. The transmitter 82 is further specifically configured to send the downlink feedback information of the UE in the downlink time-frequency resource that is corresponding to the UE, where the downlink feedback information includes success indication information or failure indication information.

Based on the foregoing technical solution, further, in the foregoing first implementation manner, in a case in which the resource mapping policy is the determining, according to an uplink time-frequency resource of the uplink data sent by the UE and the identity information that is corresponding to the UE, the downlink time-frequency resource that is corresponding to the UE, the resource mapping policy is specifically: calculating, by the transmitter 82 according to $q=(p{\times}m+i)\mathrm{mod}(rmax)$, the downlink time-frequency resource that is corresponding to the UE, where q indicates an identifier of the downlink time-frequency resource that is corresponding to the UE, p indicates an identifier of the uplink time-frequency resource of the uplink data sent by the UE, m indicates a total quantity of pieces of identity information in a system, i indicates a sequence number of the identity information that is corresponding to the UE, and rmax indicates a maximum available quantity of downlink time-frequency resources.

Based on the foregoing technical solution, further, in the foregoing first implementation manner, in a case in which the resource mapping policy is the determining, according to the identity information that is corresponding to the UE, the downlink time-frequency resource that is corresponding to the UE, the resource mapping policy is specifically: calculating, by the transmitter 82 according to q=imod(rmax), the downlink time-frequency resource that is corresponding to the UE, where q indicates an identifier of the downlink time-frequency resource that is corresponding to the UE, i indicates a sequence number of the identity information that is corresponding to the UE, and rmax indicates a maximum available quantity of downlink time-frequency resources.

Based on the foregoing technical solution, further, in a second implementation manner, the identity information includes at least one of a MAC address, a UE identifier, an IP address, and partial information of the uplink data. Correspondingly, the transmitter 82 is specifically configured to determine a temporary identifier according to a time-frequency resource of the uplink data sent by the UE. The transmitter 82 is further specifically configured to send the temporary identifier and indication information of the downlink feedback information, where the indication information of the downlink feedback information includes a downlink time-frequency resource and a feedback packet size of the downlink feedback information. The transmitter 82 is further specifically configured to send the downlink feedback information in the downlink time-frequency resource of the downlink feedback information, where the downlink feedback information includes the identity information of the UE that is successfully received by the eNB.

The eNB in Embodiment 8 of the present invention may be configured to perform the feedback information transmission method described in Embodiment 1 of the present invention to Embodiment 4 of the present invention, and for a specific implementation process and technical effect thereof, reference may be made to Embodiment 1 of the present invention to Embodiment 4 of the present invention, which are not described herein again.

It should be noted that, for ease of description, the foregoing method embodiments are described as a combination of a series of actions. However, persons skilled in the art should understand that the present invention is not limited to the described sequence of the actions, because some steps may be performed in another sequence or performed at the same time according to the present invention. In addition, persons skilled in the art should also understand that the embodiments described in this specification all belong to exemplary embodiments, and the involved actions and modules are not necessarily required by the present invention.

In the foregoing embodiments, the description of each embodiment has respective focuses. For a part that is not described in detail in an embodiment, reference may be made to related descriptions in other embodiments.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention other than limiting the present invention.

## Claims

1. A feedback information transmission method, comprising:

> sending (101, 301), by user equipment, UE, uplink data and identity information that is corresponding to the UE to a base station, eNB;
> receiving (102, 303), by the UE, downlink feedback information of the UE that is sent by the eNB according to the identity information, wherein said receiving (102, 303) comprises:
>
> > determining, by the UE according to a preset resource mapping policy, a downlink time-frequency resource that is corresponding to the UE,
> > wherein the preset resource mapping policy comprises:
> >
> > > determining, according to an uplink time-frequency resource of the uplink data sent by the UE and the identity information that is corresponding to the UE, the downlink time-frequency resource that is corresponding to the UE, or
> > > determining, according to the identity information that is corresponding to the UE, the downlink time-frequency resource that is corresponding to the UE; and
> > > receiving (102, 303), by the UE in the determined downlink time-frequency resource that is corresponding to the UE, the downlink feedback information sent by the eNB, wherein the downlink feedback information comprises a success indication information or a failure indication information.

2. The method according to claim 1, wherein the identity information comprises at least one of a random code, a preamble sequence, and interleaver information.

3. The method according to claim 1, wherein the identity information comprises at least one of a Media Access Control, MAC, address, a UE identifier, an Internet Protocol, IP, address, and partial information of the uplink data.

4. A feedback information transmission method, comprising:

receiving (201, 301), by a base station, eNB, uplink data and identity information corresponding to user equipment, UE that are from the UE; sending (202, 303), by the eNB, downlink feedback information of the UE to the UE according to the identity information, wherein said sending (202, 303) comprises:

determining, by the eNB according to a preset resource mapping policy, the downlink time-frequency resource that is corresponding to the UE, wherein the preset mapping policy comprises:

determining, according to an uplink time-frequency resource of the uplink data sent by the UE and the identity information that is corresponding to the UE, the downlink time-frequency resource that is corresponding to the UE, or determining, according to the identity information that is corresponding to the UE, the downlink time-frequency resource that is corresponding to the UE; sending (202, 303), by the eNB, the downlink feedback information of the UE in a determined downlink time-frequency resource that is corresponding to the UE, wherein the downlink feedback information comprises a success indication information or a failure indication information.

5. The method according to claim 4, wherein the identity information comprises at least one of a random code, a preamble sequence, and interleaver information.

6. The method according to claim 4, wherein the identity information comprises at least one of a Media Access Control, MAC, address, a UE identifier, an Internet Protocol, IP, address, and partial information of the uplink data.

7. User equipment UE, comprising:

a sending unit, configured to send uplink data and identity information that is corresponding to the UE to a base station eNB; and a receiving unit, configured to receive downlink feedback information of the UE that is sent by the eNB according to the identity information, wherein the receiving unit (52, 72) is specifically configured to:

determine, according to a preset resource mapping policy, the downlink time-frequency resource that is corresponding to the UE, wherein the preset mapping policy comprises:

determining, according to an uplink time-frequency resource of the uplink data sent by the UE and the identity information that is corresponding to the UE, the downlink time-frequency resource that is corresponding to the UE, or determining, according to the identity information that is corresponding to the UE, the downlink time-frequency resource that is corresponding to the UE; and receive, in a determined downlink time-frequency resource that is corresponding to the UE, the downlink feedback information sent by the eNB, wherein the downlink feedback information comprises success indication information or failure indication information.

8. The UE according to claim 7, wherein the identity information comprises at least one of a random code, a preamble sequence, and interleaver information.

9. The UE according to claim 7, wherein the identity information comprises a Media Access Control MAC address, a UE identifier, an Internet Protocol IP address, or partial information of the uplink data.

10. Abase station, eNB, comprising:

a receiving unit (61, 81), configured to receive uplink data and identity information corresponding to user equipment, UE that are from the UE; and

a sending unit (62, 82), configured to send downlink feedback information of the UE to the UE according to the identity information, wherein the sending unit (62, 82) is specifically configured to:

determine, according to a preset resource mapping policy, the downlink time-frequency resource that is corresponding to the UE, wherein the preset mapping policy comprises:

determining, according to an uplink time-frequency resource of the uplink data sent by the UE and the identity information that is corresponding to the UE, the downlink time-frequency resource that is corresponding to the UE, or

determining, according to the identity information that is corresponding to the UE, the downlink time-frequency resource that is corresponding to the UE; and

send the downlink feedback information of the UE in a determined downlink time-frequency resource that is corresponding to the UE, wherein the downlink feedback information comprises a success indication information or a failure indication information.

11. The eNB according to claim 10, wherein the identity information comprises at least one of a random code, a preamble sequence, and interleaver information.

12. The eNB according to claim 10, wherein the identity information comprises at least one of a Media Access Control, MAC, address, a UE identifier, an Internet Protocol, IP, address, and partial information of the uplink data.

**Patentansprüche**

1. Rückkopplungsinformations-Übertragungsverfahren, das umfasst:

Senden (101, 301), durch eine Benutzereinrichtung, UE, von Aufwärtsstrecken-Daten und Identitätsinformation, die der UE entspricht, an eine Basisstation, eNB;
Empfangen (102, 303), durch die UE, von Abwärtsstrecken-Rückkopplungsinformation der UE, die durch die eNB gemäß der Identitätsinformation gesendet wird, wobei das Empfangen (102, 303) umfasst:

Bestimmen, durch die UE gemäß einer voreingestellten Ressourcenzuweisungsrichtlinie, einer Abwärtsstrecken-Zeit-Frequenz-Ressource, die der UE entspricht, wobei die voreingestellte Ressourcenzuweisungsrichtlinie umfasst:

Bestimmen, gemäß einer Aufwärtsstrecken-Zeit-Frequenz-Ressource der durch die UE gesendeten Aufwärtsstrecken-Daten und der Identitätsinformation, die der UE entspricht, der Abwärtsstrecken-Zeit-Frequenz-Ressource, die der UE entspricht, oder Bestimmen, gemäß der Identitätsinformation, die der UE entspricht, der Abwärtsstrecken-Zeit-Frequenz-Ressource, die der UE entspricht; und Empfangen (102, 303), durch die UE in der bestimmten Abwärtsstrecken-Zeit-Frequenz-Ressource, die der UE entspricht, der durch die eNB gesendeten Abwärtsstrecken-Rückkopplungsinformation, wobei die Abwärtsstrecken-Rückkopplungsinformation eine Erfolgsanzeigeinformation oder eine Fehlschlaganzeigeinformation umfasst.

2. Verfahren nach Anspruch 1, wobei die Identitätsinformation mindestens eines von einem Zufallscode, einer Präambelsequenz und einer Verschachtelerinformation umfasst.

3. Verfahren nach Anspruch 1, wobei die Identitätsinformation mindestens eines von einer Medienzugriffssteuerungs-, MAC-, Adresse, einer UE-Kennung, einer Internetprotokoll-, IP-, Adresse und einer Teilinformation der Aufwärtsstrecken-Daten umfasst.

4. Rückkopplungsinformations-Übertragungsverfahren, das umfasst:

Empfangen (201, 301), durch eine Basisstation, eNB, von Aufwärtsstrecken-Daten und Identitätsinformation, die der Benutzereinrichtung, UE, entspricht, die von der UE sind;
Senden (202, 303), durch die eNB, von Abwärtsstrecken-Rückkopplungsinformation der UE an die UE gemäß der Identitätsinformation, wobei das Senden (202, 303) umfasst:

Bestimmen, durch die eNB gemäß einer voreingestellten Ressourcenzuweisungsrichtlinie, der Abwärtsstrecken-Zeit-Frequenz-Ressource, die der UE entspricht, wobei die voreingestellte Zuweisungsrichtlinie umfasst:

    Bestimmen, gemäß einer Aufwärtsstrecken-Zeit-Frequenz-Ressource der durch die UE gesendeten Aufwärtsstrecken-Daten und der Identitätsinformation, die der UE entspricht, der Abwärtsstrecken-Zeit-Frequenz-Ressource, die der UE entspricht, oder Bestimmen, gemäß der Identitätsinformation, die der UE entspricht, der Abwärtsstrecken-Zeit-Frequenz-Ressource, die der UE entspricht; Senden (202, 303), durch die eNB, der Abwärtsstrecken-Rückkopplungsinformation der UE in einer bestimmten Abwärtsstrecken-Zeit-Frequenz-Ressource, die der UE entspricht, wobei die Abwärtsstrecken-Rückkopplungsinformation eine Erfolgsanzeigeinformation oder eine Fehlschlaganzeigeinformation umfasst.

5.   Verfahren nach Anspruch 4, wobei die Identitätsinformation mindestens eines von einem Zufallscode, einer Präambelsequenz und einer Verschachtelerinformation umfasst.

6.   Verfahren nach Anspruch 4, wobei die Identitätsinformation mindestens eines von einer Medienzugriffssteuerungs-, MAC-, Adresse, einer UE-Kennung, einer Internetprotokoll-, IP-, Adresse und einer Teilinformation der Aufwärtsstrecken-Daten umfasst.

7.   Benutzereinrichtung, UE, die umfasst:

    eine Sendeeinheit, die konfiguriert ist, Aufwärtsstrecken-Daten und Identitätsinformation, die der UE entspricht, an eine Basisstation, eNB, zu senden; und eine Empfangseinheit, die konfiguriert ist, Abwärtsstrecken-Rückkopplungsinformation der UE, die durch die eNB gemäß der Identitätsinformation gesendet wird, zu empfangen, wobei die Empfangseinheit (52, 72) insbesondere zu Folgendem konfiguriert ist:

    Bestimmen, gemäß einer voreingestellten Ressourcenzuweisungsrichtlinie, der Abwärtsstrecken-Zeit-Frequenz-Ressource, die der UE entspricht, wobei die voreingestellte Zuweisungsrichtlinie umfasst:

        Bestimmen, gemäß einer Aufwärtsstrecken-Zeit-Frequenz-Ressource der durch die UE gesendeten Aufwärtsstrecken-Daten und der Identitätsinformation, die der UE entspricht, der Abwärtsstrecken-Zeit-Frequenz-Ressource, die der UE entspricht, oder Bestimmen, gemäß der Identitätsinformation, die der UE entspricht, der Abwärtsstrecken-Zeit-Frequenz-Ressource, die der UE entspricht; und Empfangen, in einer bestimmten Abwärtsstrecken-Zeit-Frequenz-Ressource, die der UE entspricht, der durch die eNB gesendeten Abwärtsstrecken-Rückkopplungsinformation, wobei die Abwärtsstrecken-Rückkopplungsinformation Erfolgsanzeigeinformation oder Fehlschlaganzeigeinformation umfasst.

8.   UE nach Anspruch 7, wobei die Identitätsinformation mindestens eines von einem Zufallscode, einer Präambelsequenz und einer Verschachtelerinformation umfasst.

9.   UE nach Anspruch 7, wobei die Identitätsinformation eine Medienzugriffssteuerungs-, MAC-, Adresse, eine UE-Kennung, eine Internetprotokoll-IP-Adresse oder eine Teilinformation der Aufwärtsstrecken-Daten umfasst.

10.  Basisstation, eNB, die umfasst:

    eine Empfangseinheit (61, 81), die konfiguriert ist, Aufwärtsstrecken-Daten und Identitätsinformation, die einer Benutzereinrichtung, UE, entspricht, die von der UE sind, zu empfangen; und eine Sendeeinheit (62, 82), die konfiguriert ist, Abwärtsstrecken-Rückkopplungsinformation der UE an die UE gemäß der Identitätsinformation zu senden, wobei die Sendeeinheit (62, 82) insbesondere zu Folgendem konfiguriert ist:

    Bestimmen, gemäß einer voreingestellten Ressourcenzuweisungsrichtlinie, der Abwärtsstrecken-Zeit-Frequenz-Ressource, die der UE entspricht, wobei die voreingestellte Zuweisungsrichtlinie umfasst:

        Bestimmen, gemäß einer Aufwärtsstrecken-Zeit-Frequenz-Ressource der durch die UE gesendeten Aufwärtsstrecken-Daten und der Identitätsinformation, die der UE entspricht, der Abwärtsstrecken-Zeit-Frequenz-Ressource, die der UE entspricht, oder

Bestimmen, gemäß der Identitätsinformation, die der UE entspricht, der Abwärtsstrecken-Zeit-Frequenz-Ressource, die der UE entspricht; und Senden der Abwärtsstrecken-Rückkopplungsinformation der UE in einer bestimmten Abwärtsstrecken-Zeit-Frequenz-Ressource, die der UE entspricht, wobei die Abwärtsstrecken-Rückkopplungsinformation eine Erfolgsanzeigeinformation oder eine Fehlschlaganzeigeinformation umfasst.

11. eNB nach Anspruch 10, wobei die Identitätsinformation mindestens eines von einem Zufallscode, einer Präambelsequenz und einer Verschachtelerinformation umfasst.

12. eNB nach Anspruch 10, wobei die Identitätsinformation mindestens eines von einer Medienzugriffssteuerungs-, MAC-, Adresse, einer UE-Kennung, einer Internetprotokoll-, IP-, Adresse und einer Teilinformation der Aufwärtsstrecken-Daten umfasst.

**Revendications**

1. Procédé de transmission d'informations de rétroaction, comportant :

l'envoi (101, 301) à une station de base, eNB, par un équipement d'utilisateur, UE, de données de liaison montante et d'informations d'identité qui correspondent à l'UE ; la réception (102, 303), par l'UE, d'informations de rétroaction de liaison descendante de l'UE qui sont émises par l'eNB d'après les informations d'identité, ladite réception (102, 303) comportant :

la détermination, par l'UE selon une politique préétablie de mappage de ressources, d'une ressource temps-fréquence de liaison descendante qui correspond à l'UE, la politique préétablie de mappage de ressources comportant :

la détermination, selon une ressource temps-fréquence de liaison montante des données de liaison montante émises par l'UE et les informations d'identité qui correspondent à l'UE, de la ressource temps-fréquence de liaison descendante qui correspond à l'UE, ou la détermination, d'après les informations d'identité qui correspondent à l'UE, de la ressource temps-fréquence de liaison descendante qui correspond à l'UE ; et la réception (102, 303), par l'UE dans la ressource temps-fréquence de liaison descendante déterminée qui correspond à l'UE, des informations de rétroaction de liaison descendante émises par l'eNB, les informations de rétroaction de liaison descendante comportant une information d'indication de réussite ou une information d'indication d'échec.

2. Procédé selon la revendication 1, les informations d'identité comportant au moins un élément parmi un code aléatoire, une séquence de préambule, et des informations d'entrelaceur.

3. Procédé selon la revendication 1, les informations d'identité comportant au moins une information parmi une adresse de commande d'accès au support physique, MAC, un identifiant d'UE, une adresse de protocole Internet, IP, et des informations partielles des données de liaison montante.

4. Procédé de transmission d'informations de rétroaction, comportant :

la réception (201, 301), par une station de base, eNB, de données de liaison montante et d'informations d'identité correspondant à un équipement d'utilisateur, UE, qui proviennent de l'UE ; l'envoi (202, 303) à l'UE, par l'eNB, d'informations de rétroaction de liaison descendante de l'UE d'après les informations d'identité, ledit envoi (202, 303) comportant :

la détermination, par l'eNB selon une politique préétablie de mappage de ressources, de la ressource temps-fréquence de liaison descendante qui correspond à l'UE, la politique préétablie de mappage comportant :

la détermination, selon une ressource temps-fréquence de liaison montante des données de liaison montante émises par l'UE et les informations d'identité qui correspondent à l'UE, de la ressource temps-fréquence de liaison descendante qui correspond à l'UE, ou la détermination, d'après les informations d'identité qui correspondent à l'UE, de la ressource temps-fréquence de liaison descendante qui correspond à l'UE ;

l'envoi (202, 303), par l'eNB, des informations de rétroaction de liaison descendante de l'UE dans une ressource temps-fréquence de liaison descendante déterminée qui correspond à l'UE, les informations de rétroaction de liaison descendante comportant une information d'indication de réussite ou une information d'indication d'échec.

5. Procédé selon la revendication 4,
les informations d'identité comportant au moins un élément parmi un code aléatoire, une séquence de préambule, et des informations d'entrelaceur.

6. Procédé selon la revendication 4,
les informations d'identité comportant au moins une information parmi une adresse de commande d'accès au support physique, MAC, un identifiant d'UE, une adresse de protocole Internet, IP, et des informations partielles des données de liaison montante.

7. Équipement d'utilisateur UE, comportant ;

une unité d'émission, configurée pour envoyer à une station de base eNB des données de liaison montante et des informations d'identité qui correspondent à l'UE ; et
une unité de réception, configurée pour recevoir des informations de rétroaction de liaison descendante de l'UE qui sont émises par l'eNB d'après les informations d'identité, l'unité (52, 72) de réception étant spécifiquement configurée pour :

déterminer, selon une politique préétablie de mappage de ressources, la ressource temps-fréquence de liaison descendante qui correspond à l'UE,
la politique préétablie de mappage comportant :

la détermination, selon une ressource temps-fréquence de liaison montante des données de liaison montante émises par l'UE et les informations d'identité qui correspondent à l'UE, de la ressource temps-fréquence de liaison descendante qui correspond à l'UE, ou la détermination, d'après les informations d'identité qui correspondent à l'UE, de la ressource temps-fréquence de liaison descendante qui correspond à l'UE ; et recevoir, dans une ressource temps-fréquence de liaison descendante déterminée qui correspond à l'UE, les informations de rétroaction de liaison descendante émises par l'eNB, les informations de rétroaction de liaison descendante comportant une information d'indication de réussite ou une information d'indication d'échec.

8. UE selon la revendication 7,
les informations d'identité comportant au moins un élément parmi un code aléatoire, une séquence de préambule, et des informations d'entrelaceur.

9. UE selon la revendication 7,
les informations d'identité comportant une adresse de commande d'accès au support physique, MAC, un identifiant d'UE, une adresse de protocole Internet, IP, ou des informations partielles des données de liaison montante.

10. Station de base, eNB, comportant :

une unité (61, 81) de réception, configurée pour recevoir des données de liaison montante et des informations d'identité correspondant à un équipement d'utilisateur, UE, qui proviennent de l'UE ; et
une unité (62, 82) d'émission, configurée pour envoyer à l'UE des informations de rétroaction de liaison descendante de l'UE d'après les informations d'identité, l'unité (62, 82) d'émission étant spécifiquement configurée pour :

déterminer, selon une politique préétablie de mappage de ressources, la ressource temps-fréquence de liaison descendante qui correspond à l'UE,
la politique préétablie de mappage comportant :

la détermination, selon une ressource temps-fréquence de liaison montante des données de liaison montante émises par l'UE et les informations d'identité qui correspondent à l'UE, de la ressource temps-fréquence de liaison descendante qui correspond à l'UE, ou la détermination, d'après les informations d'identité qui correspondent à l'UE, de la ressource temps-fréquence de liaison descendante qui correspond à l'UE ; et
émettre les informations de rétroaction de liaison descendante de l'UE dans une ressource temps-fréquence de liaison descendante déterminée qui correspond à l'UE, les informations de rétroaction de liaison descendante comportant une information d'indication de réussite ou une information d'indication d'échec.

**11.** eNB selon la revendication 10,
les informations d'identité comportant au moins un élément parmi un code aléatoire, une séquence de préambule, et des informations d'entrelaceur.

**12.** eNB selon la revendication 10,
les informations d'identité comportant au moins une information parmi une adresse de commande d'accès au support physique, MAC, un identifiant d'UE, une adresse de protocole Internet, IP, et des informations partielles des données de liaison montante.

UE sends uplink data and identity information that is corresponding to the UE to an eNB ～101

The UE receives downlink feedback information of the UE that is sent by the eNB according to the identity information ～102

FIG. 1

An eNB receives uplink data and identity information corresponding to UE that are from the UE ～201

The eNB sends downlink feedback information of the UE to the UE according to the identity information ～202

FIG. 2

```
┌─────────┐                                    ┌─────────┐
│   UE    │                                    │   eNB   │
└────┬────┘                                    └────┬────┘
     │                                              │
     │  301: UE sends uplink data and identity      │
     │        information that is corresponding      │
     │        to the UE to an eNB                    │
     │──────────────────────────────────────────────▶
     │                                              │
┌────┴─────────────────┐            ┌──────────────┴─────────┐
│ 302: The UE and the  │            │ 302: THe UE and the    │
│   eNB separately     │            │   eNB separately       │
│ determine, according │            │ determine, according   │
│ to a preset resource │            │ to a preset resource   │
│  mapping policy, a   │            │  mapping policy, a     │
│   downlink time-     │            │   downlink time-       │
│ frequency resource   │            │ frequency resource     │
│ that is corresponding│            │ that is corresponding  │
│      to the UE       │            │      to the UE         │
└────┬─────────────────┘            └──────────────┬─────────┘
     │                                              │
     │  303: The eNB sends downlink feedback        │
     │       information of the UE in the downlink   │
     │       time-frequency resource that is         │
     │       corresponding to the UE, where the      │
     │       downlink feedback information includes   │
     │       success indication information or        │
     │       failure indication information           │
     ◀──────────────────────────────────────────────│
┌────┴───────────────┐                              │
│  304: The UE       │                              │
│ determines whether │                              │
│  the downlink      │                              │
│ feedback information│                             │
│  is the success    │                              │
│ indication information                            │
│  or the failure    │                              │
│ indication information                            │
└────┬───────────────┘                              │
     │  305: The UE resends the uplink data to      │
     │        the eNB                                │
     │──────────────────────────────────────────────▶
     │                                              │
```

FIG. 3

| UE | | eNB |
|---|---|---|

401: UE sends uplink data and identity information that is corresponding to the UE to an eNB

402: The UE and the eNB separately determine a temporary identifier according a time-frequency resource of the uplink data sent by the UE

402: The UE and the eNB separately determine a temporary identifier according a time-frequency resource of the uplink data sent by the UE

403: The eNB sends indication information, which is processed by using the temporary identifier, of downlink feedback information to the UE

404: The UE receives the indication information of the downlink feedback information according to the temporary identifier

405: The eNB sends the downlink feedback information in a downlink time-frequency resource of the downlink feedback information

406: The UE receives, in the downlink time-frequency resource of the downlink feedback information, the downlink feedback information sent by the eNB

407: The UE determines whether the downlink feedback information includes the identity information of the UE

408: The UE resends the uplink data to the eNB

FIG. 4

```
                    ⌇51                          ⌇52
        ┌─────────────┐              ┌─────────────┐
        │   Sending   │              │  Receiving  │
        │    unit     │──────────────│    unit     │
        │             │              │             │
        └─────────────┘              └─────────────┘
```

FIG. 5

```
                    ⌇61                          ⌇62
        ┌─────────────┐              ┌─────────────┐
        │  Receiving  │              │   Sending   │
        │    unit     │──────────────│    unit     │
        │             │              │             │
        └─────────────┘              └─────────────┘
```

FIG. 6

```
            ⌇71                              ⌇72
    ┌───────────────┐              ┌───────────────┐
    │  Transmitter  │              │   Receiver    │
    │               │              │               │
    └───────────────┘              └───────────────┘
            ⇕                  ⌇74          ⇕
    ◁════════════════════════════════════════════════▷
                          Bus
                           ⇕
                  ┌───────────────┐ ⌇73
                  │    Memory     │
                  │               │
                  └───────────────┘
```

FIG. 7

FIG. 8

**EP 2 958 259 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1954084 A1
- CN 101980576 A
- US 20070206531 A1